# FASCICULE DE BREVET EUROPEEN

(11) **EP 1 736 637 B1**
(45) Date de publication et mention de la délivrance du brevet: **13.01.2016**
(21) Numéro de dépôt: 06115891.1
(22) Date de dépôt: 22.06.2006
(51) Int. Cl.: F01D 25/16, F16B 39/06

(54) **Dispositif de blocage en rotation d'un écrou de serrage**
Drehsperrvorrichtung für eine Spannmutter
Rotation locking device for a clamping nut

(30) Priorité: 24.06.2005 FR 0551748
(43) Date de publication de la demande: 27.12.2006
(73) Titulaire: SNECMA, 75015 Paris (FR)
(72) Inventeur: Bart, Jacques, René, 91370, Verrières le Buisson (FR); Berbiguier, Laurent, Michel, André, 77300, Fontainebleau (FR)
(74) Mandataire: Ahner, Philippe

(56) Documents cités:
- DE-A1- 2 439 448
- US-A- 3 541 624
- US-A- 4 046 430
- US-A- 4 175 803
- US-A- 4 884 903
- US-A1- 2003 044 097

## Description

### DOMAINE TECHNIQUE

La présente invention se rapporte au domaine technique du maintien d'une pièce à l'intérieur d'une extrémité d'un arbre creux ou d'un tourillon d'une turbomachine telle qu'un moteur d'aéronef, ladite pièce pouvant être une bague extérieure de roulement.

Plus particulièrement, l'invention concerne un ensemble de blocage en rotation d'un écrou de serrage d'une pièce sur une extrémité d'un arbre creux.

L'invention concerne enfin un moteur d'aéronef équipé d'un tel ensemble de blocage en rotation.

Dans tout ce qui suit, le terme « axial » se rapporte à la direction axiale de la turbomachine.

### ÉTAT DE LA TECHNIQUE ANTÉRIEURE

Un ensemble de blocage avec les caractéristiques du préambule de la revendication 1 est décrit dans le document US 4 046 430.

Le document US-A-4 037 980 représente une configuration de la technique antérieure. Sur la figure 1, qui représente une autre configuration de la technique antérieure, sont représentés un arbre creux représentés un arbre creux 102 d'une turbine haute pression d'une turbomachine telle qu'un moteur d'aéronef, une bague extérieure de roulement 104 ajustée à l'intérieur de cet arbre 102, et un écrou de serrage 106 de cette bague extérieure de roulement 104.

L'écrou de serrage 106 est vissé à l'intérieur de l'arbre 102, et vient appuyer contre la bague extérieure de roulement 104 afin de la maintenir en place.

L'extrémité libre 108 de l'écrou de serrage 106 dépasse axialement par rapport à l'extrémité de l'arbre 102, et comporte des crans de serrage, qui sont des renfoncements dans lesquels il est possible de glisser un outil afin de visser l'écrou de serrage 106.

L'écrou de serrage 106 est doté d'un dispositif de blocage en rotation 110, 112, 114 comportant un jonc anti-rotation 110 logé dans une gorge 112 de l'écrou de serrage 106, cette gorge 112 s'ouvrant radialement vers l'intérieur de l'écrou de serrage 106. De part et d'autre de la gorge 112, se trouvent des parties en relief 114 de l'écrou de serrage 106, qui présentent une surface irrégulière et des arêtes vives.

Un conduit de circulation d'huile 116 est prévu à travers l'écrou de serrage 106 de manière à permettre une alimentation d'huile entre l'arbre 102 et la bague extérieure de roulement 104.

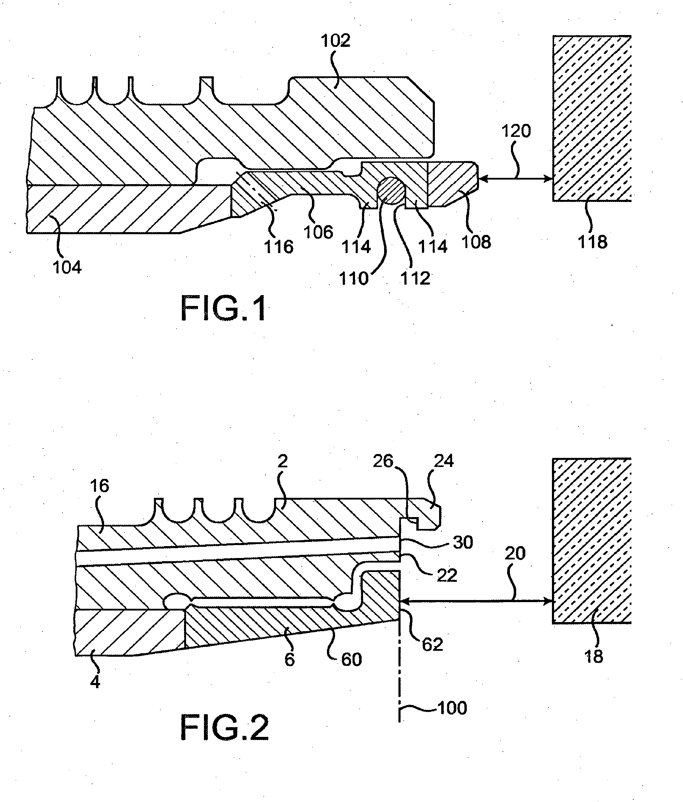

L'extrémité de l'arbre 102 de la turbine haute pression se trouve en regard d'une extrémité d'un arbre 118 d'une turbine basse pression (représenté schématiquement à droite de la figure 1). La distance axiale entre l'arbre 102 de turbine haute pression et l'arbre 118 de turbine basse pression est désignée par la référence 120.

La configuration qui vient d'être décrite présente un certain nombre d'inconvénients.

Un premier inconvénient provient du fait que lors du fonctionnement de la turbomachine, l'arbre 102 de turbine haute pression et l'arbre 118 de turbine basse pression sont soumis à des déplacements respectifs indépendants l'un de l'autre et à des dilatations dues à la chaleur. Il en résulte des déplacements relatifs, notamment selon la direction axiale, entre l'arbre 102 de turbine haute pression et l'arbre 118 de turbine basse pression. Afin d'éviter les risques de collision entre l'arbre 102 de turbine haute pression et l'arbre 118 de turbine basse pression, il est souhaitable que la distance 120 entre l'arbre 102 et l'arbre 118 soit la plus grande possible, tout en procurant à la turbomachine un encombrement le plus réduit possible.

Un deuxième inconvénient provient du fait que lorsque l'écrou est destiné à maintenir en place une bague extérieure de roulement, les arêtes de l'écrou de serrage 106 présentes sur les parties en relief 114 de celui-ci constituent des accidents de forme qui peuvent blesser les éléments roulants du roulement, lors du montage de ceux-ci postérieurement au montage de l'écrou de serrage, avec pour conséquence une réduction de la durée de vie des éléments roulants.

Par conséquent il existe un besoin de disposer d'un écrou de serrage d'une pièce, notamment d'une bague de roulement extérieure d'un arbre de turbine haute pression, qui soit doté d'un dispositif de blocage qui s'oppose à une rotation de l'écrou de serrage, et qui soit compatible avec un déplacement axial relatif important entre l'arbre de turbine haute pression et l'arbre de turbine basse pression, tout en réduisant le plus possible l'encombrement axial de ces pièces

En outre, il est souhaitable que l'écrou de serrage ne blesse pas les pièces de roulement lors de leur montage.

### EXPOSÉ DE L'INVENTION

L'invention propose de remédier aux inconvénients énoncés ci-dessus.

Selon un premier aspect, l'invention se rapporte à un ensemble de blocage en rotation selon la revendication 1.

De préférence, l'ensemble de blocage en rotation comporte un nombre impair de découpes d'arbre et un nombre pair de découpes d'écrou.

L'ensemble de blocage en rotation comporte, en outre, un anneau de rétention dudit pion de blocage suivant une direction axiale.

De préférence, l'anneau de rétention comporte, en outre, au moins une patte de rétention, s'étendant radialement vers l'intérieur, le nombre de pattes de rétention étant identique au nombre de découpes d'arbre.

De préférence, ledit anneau de rétention présente des échancrures qui s'ouvrent radialement vers l'intérieur, chaque échancrure étant située entre deux pattes de rétention successives.

De préférence, ledit ensemble de blocage en rotation comporte un doigt sur ledit anneau de rétention et une encoche de l'arbre, qui coopèrent pour empêcher une rotation axiale dudit anneau de rétention.

De préférence, ladite encoche se trouve en regard d'une découpe d'arbre sur un rebord d'extrémité, axialement en saillie, de l'arbre.

De préférence, ledit doigt s'étend radialement vers l'extérieur en regard de l'une desdites pattes de rétention.

De préférence, ledit anneau de rétention est doté d'une fente de montage.

De préférence, ladite fente de montage et ledit doigt sont positionnés de manière diamétralement opposée sur ledit anneau de rétention.

De préférence, l'ensemble de blocage en rotation comporte, en outre, une gorge de réception pour la réception dudit anneau de rétention, ménagée sur une face d'extrémité radialement intérieure de l'arbre.

Enfin selon un deuxième aspect, l'invention se rapporte à un moteur d'aéronef, équipé d'au moins un ensemble de blocage en rotation selon le premier aspect.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1, déjà décrite, illustre, en coupe axiale, un agencement d'écrou de serrage d'un arbre de turbine haute pression selon la technique antérieure ;
- la figure 2 illustre, en coupe axiale, un agencement d'écrou de serrage selon l'invention ;
- la figure 3 illustre, en perspective et avec arrachement partiel, l'agencement d'écrou de serrage selon l'invention ;

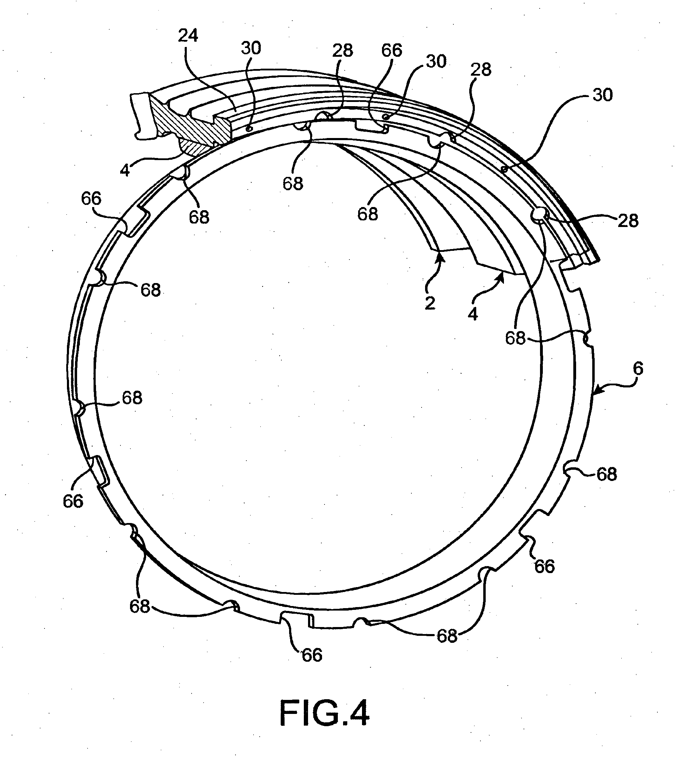

- la figure 4 illustre, en perspective et avec arrachement partiel, une étape de mise en oeuvre des moyens anti-rotation de l'écrou de serrage ;
- la figure 5 illustre, en perspective et avec arrachement partiel, une autre étape de mise en oeuvre des moyens anti-rotation de l'écrou de serrage ;
- les figures 6 et 7 illustrent, en perspective et avec arrachement partiel, des détails de réalisation des moyens anti-rotation de l'écrou de serrage.

### EXPOSÉ DÉTAILLÉ DE MODES DE RÉALISATION PARTICULIERS

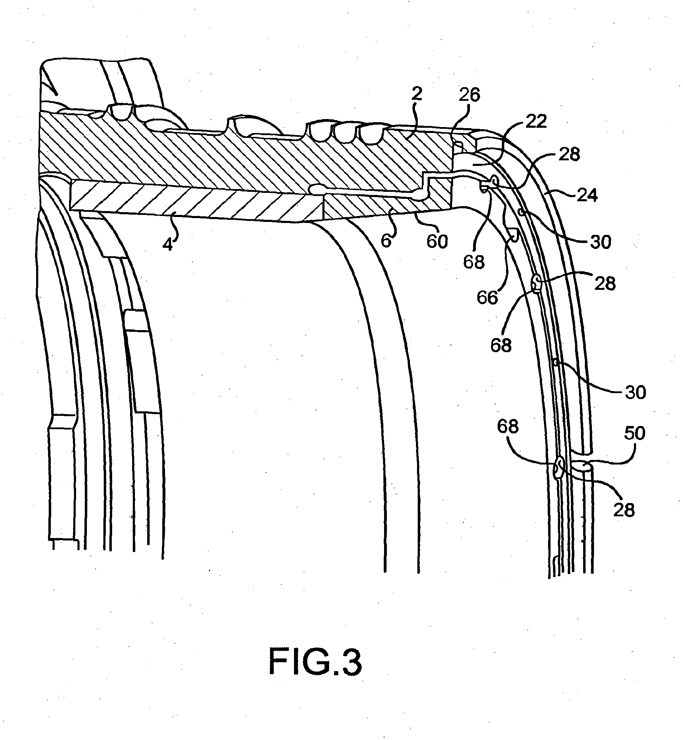

En se référant tout d'abord aux figures 2 et 3, il est représenté un arbre creux 2 d'une turbine d'une turbomachine. Dans cet arbre creux 2 est disposée une bague extérieure de roulement 4, qui est introduite par une extrémité libre de l'arbre creux 2. La bague extérieure de roulement 4 est maintenue en place au moyen d'un écrou de serrage 6, qui est introduit après elle par l'extrémité de l'arbre creux 2 et qui la maintient en place. A cet effet, l'écrou de serrage 6 est muni d'un filetage extérieur qui coopère avec un filetage intérieur de l'arbre creux 2.

L'écrou de serrage 6 possède une extrémité qui est en contact avec la bague extérieure de roulement, et une extrémité libre.

Les références 22 et 62 désignent, respectivement une face d'extrémité libre de l'arbre creux 2 et une face d'extrémité libre de l'écrou de serrage 6, ces deux faces d'extrémité respectives 22, 62 étant sensiblement contenues dans un même plan radial d'extrémité 100 (voir figure 2).

Le repère 20 désigne la distance axiale qui sépare ce plan radial d'extrémité 100 d'un arbre d'une turbine basse pression 18 (représenté schématiquement à droite de la figure 2)

L'arbre creux 2 comporte un rebord d'arbre 24 qui s'étend axialement à partir de la face d'extrémité 22, et dans lequel est ménagée, sensiblement à l'aplomb du plan radial 100, une gorge 26 s'ouvrant radialement vers l'intérieur de l'arbre 2.

L'arbre creux 2 comporte des découpes d'arbre 28, réparties sur sa périphérie radialement intérieure et qui s'ouvrent aussi sur sa face d'extrémité 22.

L'arbre creux 2 est traversé par des passages d'huile 16, qui permettent une circulation de retour d'huile entre la bague extérieure de roulement 4 et la face d'extrémité 22 de l'arbre 2, et qui débouchent sur cette face d'extrémité 22 en des orifices 30.

L'écrou de serrage 6 comporte une collerette 64, qui s'étend radialement vers l'extérieur et qui se termine par sa face d'extrémité 62.

L'écrou de serrage 6 comporte des crans de serrage 66, qui sont des évidements répartis sur la périphérie radialement extérieure de la collerette 64, et qui s'ouvrent aussi sur sa face d'extrémité 62.

L'écrou de serrage 6 comporte des découpes d'écrou 68 réparties sur la périphérie radialement extérieure de la collerette 64, et qui s'ouvrent aussi sur sa face d'extrémité 62.

Les faces d'extrémité 22 et 62 de l'arbre 2 et de l'écrou de serrage 6, ainsi que les crans de serrage 60, les découpes d'écrou 68, les découpes d'arbre 28 et les passages d'huile 30, sont particulièrement visibles sur la figure 3, qui est une vue en perspective avant montrant l'écrou de serrage 6 et une portion de l'arbre creux 2. Sur l'exemple illustré aux figures, l'écrou de serrage comporte six crans de serrage 66 et douze découpes d'écrou 68, tandis que l'arbre 2 comporte treize découpes d'arbre 28.

Le dispositif de blocage en rotation de l'écrou de serrage 6 comporte les découpes d'arbre 28 et les découpes d'écrou 68. Il comporte aussi un pion de blocage 8. Pour bloquer en rotation l'écrou de serrage 6, on fait tourner celui-ci par rapport à l'arbre creux 2 jusqu'à ce que l'une des découpes d'écrou 68 se trouve en coïncidence avec l'une des découpes d'arbre 28. Les deux découpes 68, 28 ainsi mises en coïncidence forment un trou de blocage 682 dans lequel est introduit le pion de blocage 8.

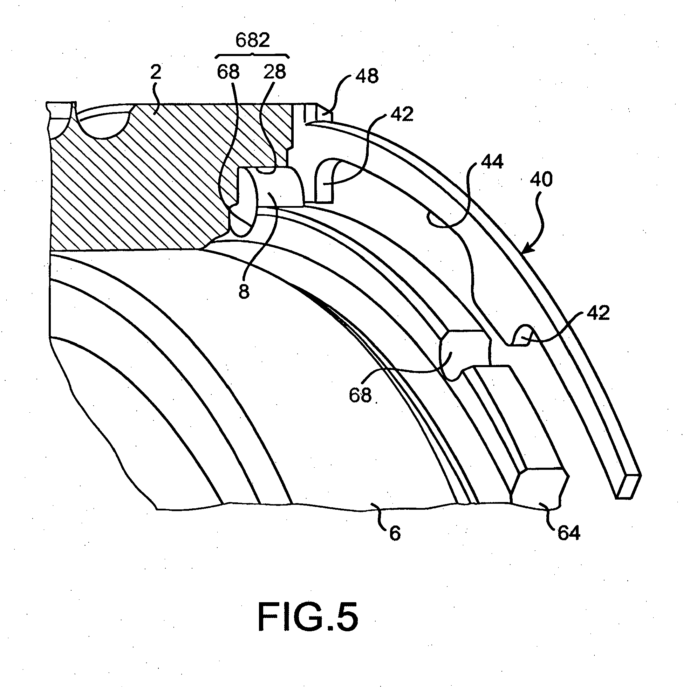

La figure 5 illustre, en vue agrandie, le blocage en rotation de l'écrou de serrage 6. Elle montre une portion de l'écrou de serrage 6 et une portion de l'arbre creux 2 au niveau d'un trou de blocage 682 dans lequel est inséré un pion de blocage 8. Sur l'exemple illustré, les découpes d'arbre 28 et les découpes d'écrou 68 ont un contour circulaire, de sorte que le trou de blocage 682 présente une section circulaire. Le pion de blocage 8 présente également une section circulaire.

Le dispositif de blocage en rotation de l'écrou de serrage 6 comporte aussi un anneau de rétention 40, qui retient le pion de blocage 8 suivant la direction axiale après que ce pion de blocage a été introduit dans le trou de blocage 682. L'anneau de rétention axiale 40 est également représenté sur la figure 5.

Le dispositif de blocage en rotation comporte aussi la gorge 26 de l'arbre creux 2 qui est une gorge de réception pour l'anneau de rétention 40. Le diamètre de l'anneau de rétention 40 et la profondeur de la gorge de réception 26 sont établis de manière à permettre l'insertion et le maintien de l'anneau de rétention 40 dans la gorge 26.

L'anneau de rétention 40 présente des pattes de rétention 42 qui s'étendent radialement vers l'intérieur. Ces pattes de rétention 42 sont réparties sur sa circonférence et leur nombre est identique au nombre de découpes d'arbre 28, de telle sorte que pour une position angulaire particulière de l'anneau de rétention 40 dans la gorge de réception 26, chaque patte de rétention 42 recouvre une découpe d'arbre 68. Entre les pattes de rétention 42, l'anneau de rétention 40 présente des échancrures 44 qui s'ouvrent radialement vers l'intérieur.

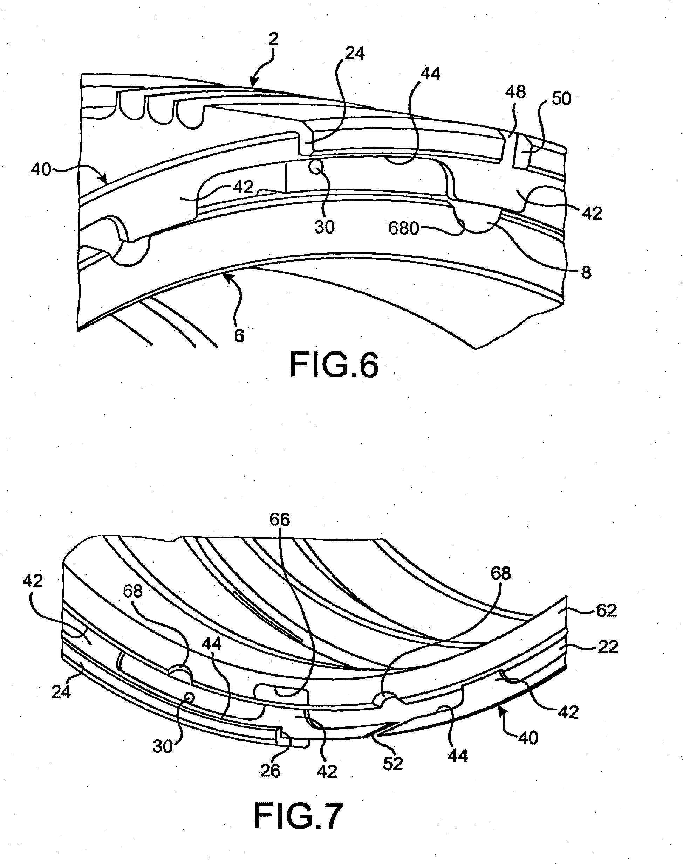

Comme illustré sur les figures 5 et 6, l'anneau de rétention 40 comporte, en outre, un doigt 48 qui s'étend radialement vers l'extérieur à partir de sa périphérie extérieure. De plus, et le rebord 24 de l'arbre 2 est interrompu par une encoche 50, située en regard de l'une 280 des découpes d'arbre 28.

Par conséquent, pour obtenir un blocage en rotation de l'écrou de serrage 6 par rapport à l'arbre creux 2, on fait tourner l'écrou de serrage 6 jusqu'à ce que la découpe d'arbre 280 en regard de laquelle se trouve l'encoche 50 arrive en coïncidence avec l'une 680 des découpes d'écrou 68. Puis on introduit un pion de blocage 8 dans le trou de blocage 682 formé par la mise en coïncidence de cette découpe d'arbre 280 avec cette découpe d'écrou 680. Puis on introduit l'anneau de rétention 40 dans la gorge de réception 26 et on le positionne de telle manière que le doigt 48 soit inséré dans l'encoche 50.

Ainsi, l'anneau de rétention 40 est immobilisé en rotation par rapport à l'arbre 2, et donc par rapport au trou de blocage 682 dans lequel a été placé le pion de blocage 8. Ce pion de blocage 8 se trouve retenu axialement par l'une des pattes de rétention 42 de l'anneau de rétention 40. Ce pion de blocage 8 ne peut pas s'échapper du trou de blocage 682. La présence du pion de blocage 8 empêche une rotation de l'écrou de serrage 6 par rapport à l'arbre 2.

Comme illustré sur la figure 7, l'anneau de rétention 40 comporte, en outre, une fente de montage 52 qui permet d'ouvrir l'anneau de rétention 40 pour le déformer et réduire temporairement son diamètre, afin de l'introduire dans la gorge de réception 26. De préférence, la fente de montage 52 est positionnée sur l'anneau de rétention 40 de manière à être diamétralement opposée au doigt 48.

Un avantage de la configuration de l'anneau de rétention 40 selon l'invention réside dans le fait que la présence des échancrures 44 permet aux orifices 30 des passages d'huile 32 de rester dégagés lorsque le dispositif de blocage en rotation est installé. Celui-ci ne perturbe donc pas le retour d'huile depuis la bague de roulement 4.

L'écrou de serrage 6 présente, en outre, une face radialement intérieure 60 qui est lisse et qui s'évase en direction de son extrémité libre. En d'autres termes, l'écrou de serrage présente une ouverture conique. Cette géométrie particulière de l'écrou de serrage 6 permet d'éviter d'accrocher ou de blesser les éléments de roulement complémentaires de la bague extérieure de roulement 4 lors de leur montage.

Le dispositif de blocage en rotation selon l'invention présente un avantage important par rapport à ceux de la technique antérieure qui ont été précédemment discutés. En effet, comme cela apparaît en comparant les figures 1 et 2, la distance 20 entre l'arbre de turbine haute pression 2 et l'arbre de turbine basse pression 18 selon l'invention est plus grande que la distance 120 entre l'arbre de turbine haute pression 102 et l'arbre de turbine basse pression 118 selon la technique antérieure.

La configuration du dispositif de blocage selon l'invention autorise par conséquent des déplacements axiaux des arbres plus importants que la technique antérieure

L'invention n'est pas limitée au mode de réalisation qui vient d'être décrit.

On pourrait envisager, sans sortir du cadre de l'invention, que l'arbre creux ait un nombre de découpes d'arbre différent de 13, et que l'écrou de serrage ait un nombre de découpes d'écrou différent de 12. Il est toutefois nécessaire que le nombre de découpes d'arbre et le nombre de découpes d'écrou soient différents l'un de l'autre. De préférence, l'un de ces nombres est un nombre pair et l'autre de ces nombres est un nombre impair.

On pourrait envisager, sans sortir du cadre de l'invention, que les découpes d'arbre et les découpes d'écrou aient une forme différente d'une forme circulaire, et que le pion de blocage ait une forme complémentaire de celle du trou de blocage formé par la mise en coïncidence de l'un des trous d'arbre avec l'un des trous d'écrou.

L'invention qui vient d'être décrite dans la description détaillée qui précède illustre un dispositif de blocage en rotation d'un écrou de serrage d'une bague extérieure de roulement. L'invention pourrait s'appliquer à une pièce autre qu'une bague extérieure de roulement, qui doit être maintenue en place par un écrou de serrage à l'intérieure d'un arbre creux, à proximité d'une extrémité de celui-ci.

## Revendications

1. Ensemble de blocage en rotation comprenant un arbre creux (2) ayant une direction axiale, un écrou de serrage (6) et une pièce (4), notamment une bague extérieure de roulement,
ledit écrou de serrage (6) étant vissé à l'intérieur dudit arbre (2), et ledit écrou de serrage (6) ayant une extrémité en contact avec ladite pièce (4) et une extrémité libre,
**caractérisé en ce qu'**il comporte :
- plusieurs découpes d'arbre (28), sur la périphérie radialement intérieure d'une extrémité de l'arbre (2),
- plusieurs découpes d'écrou (68), sur la périphérie radialement extérieure d'une extrémité dudit écrou de serrage (6),
- un pion de blocage (8) destiné à être placé dans un trou de blocage (682) formé par la mise en coïncidence d'une découpe d'arbre (28) avec une découpe d'écrou (680), et **en ce qu'**il comporte, en outre, un anneau de rétention (40) dudit pion de blocage (8) suivant une direction axiale.

2. Ensemble de blocage en rotation selon la revendication 1, **caractérisé en ce qu'**il comporte un nombre impair de découpes d'arbre (28) et un nombre pair de découpes d'écrou (68).

3. Ensemble de blocage en rotation selon la revendication 2, **caractérisé en ce qu'**il comporte 13 découpes d'arbre (28) et 12 découpes d'écrou (68).

4. Ensemble de blocage en rotation selon la revendication 1, **caractérisé en ce que** l'anneau de rétention (40) comporte au moins une patte de rétention (42), s'étendant radialement vers l'intérieur, le nombre de pattes de rétention (42) étant identique au nombre de découpes d'arbre (28).

5. Ensemble de blocage en rotation selon la revendication 4, **caractérisé en ce que** ledit anneau de rétention (40) présente des échancrures (44) qui s'ouvrent radialement vers l'intérieur, chaque échancrure (44) étant située entre deux pattes de rétention successives (42).

6. Ensemble de blocage en rotation selon l'une quelconque des revendications 1 à 5, **caractérisé en ce qu'**il comporte un doigt (48) sur ledit anneau de rétention (40) et une encoche (50) de l'arbre (2), qui coopèrent pour empêcher une rotation axiale dudit anneau de rétention (40).

7. Ensemble de blocage selon la revendication 6, **caractérisé en ce que** ladite encoche (50) se trouve en regard d'une découpe d'arbre (280) sur un rebord d'extrémité (24), axialement en saillie, de l'arbre (2).

8. Ensemble de blocage selon la revendication 6 ou 7 et la revendication 4 ou 5, **caractérisé en ce que** ledit doigt (48) s'étend radialement vers l'extérieur en regard de l'une desdites pattes de rétention (42).

9. Ensemble de blocage en rotation selon l'une quelconque des revendications 3 à 8, **caractérisé en ce que** ledit anneau de rétention (40) est doté d'une fente de montage (52).

10. Ensemble de blocage en rotation selon l'une quelconque des revendications 6 à 9, **caractérisé en ce que** ladite fente de montage (52) et ledit doigt (48) sont positionnés de manière diamétralement opposée sur ledit anneau de rétention (40).

11. Ensemble de blocage en rotation selon l'une quelconque des revendications 3 à 10, **caractérisé en ce qu'**il comporte, en outre, une gorge de réception (26) pour la réception dudit anneau de rétention (40), ménagée sur une face d'extrémité (22) radialement intérieure de l'arbre (2).

12. Moteur d'aéronef, **caractérisé en ce qu'**il est équipé d'au moins un ensemble de blocage en rotation selon l'une quelconque des revendications 1 à 11.

## Patentansprüche

1. Drehsperrvorrichtung, bestehend aus einer Hohlachse (2) mit einer axialen Richtung, aus einer Spannmutter (6) und einem Teil (4), insbesondere einem Rollenlageraußenring, wobei die genannte Spannmutter (6) im Inneren der genannten Achse (2) verschraubt ist, und wobei diese Spannmutter (6) ein Ende, das sich in Kontakt mit dem Teil (4) befindet, sowie ein freies Ende hat,
**dadurch gekennzeichnet,**
**dass** sie aufweist:
- mehrere Achs-Ausschnitte (28) an dem radial inneren Umfang eines Endes der Achse (2),
- mehrere Mutter-Ausschnitte (68) an dem radial äußeren Umfang eines Endes der genannten Spannmutter (6),
- einen Sperrzapfen (8), der dazu bestimmt ist, in ein Sperrloch (682) gesteckt zu werden, welches durch die Überdeckung eines Achs-Ausschnitts (28) mit einem Mutter-Ausschnitt (680) gebildet wird,
und **dass** sie ferner einen Blockierring (40) zum Blockieren dieses Sperrzapfens (8) in einer axialen Richtung aufweist.

2. Drehsperrvorrichtung nach Anspruch 1,
**dadurch gekennzeichnet,**
**dass** sie eine ungerade Anzahl von Achs-Ausschnitten (28) und eine gerade Anzahl von Mutter-Ausschnitten (68) aufweist.

3. Drehsperrvorrichtung nach Anspruch 2,
**dadurch gekennzeichnet,**
**dass** sie 13 Achs-Ausschnitte (28) und 12 Mutter-Ausschnitte (68) aufweist.

4. Drehsperrvorrichtung nach Anspruch 1,
**dadurch gekennzeichnet,**
**dass** der Blockierring (40) mindestens eine Blockierklaue (42) aufweist, die sich radial ins Innere erstreckt, wobei die Anzahl der Blockierklauen (42) identisch mit der Anzahl der Achs-Ausschnitte (28) ist.

5. Drehsperrvorrichtung nach Anspruch 4,
**dadurch gekennzeichnet,**
**dass** der Blockierring (40) Aussparungen (44) aufweist, die sich radial ins Innere öffnen, wobei sich jede Aussparung (44) zwischen zwei aufeinanderfolgenden Blockierklauen (42) befindet.

6. Drehsperrvorrichtung nach einem der Ansprüche 1 bis 5,
**dadurch gekennzeichnet,**
**dass** sie einen Finger (48) auf dem Blockierring (40) sowie eine Raste (50) an der Achse (2) aufweist, die zusammenwirken, um eine axiale Drehung dieses Blockierrings (40) zu verhindern.

7. Drehsperrvorrichtung nach Anspruch 6,
**dadurch gekennzeichnet,**
**dass** sich diese Raste (50) im Bereich eines Achs-Ausschnitts (280) an einem axial hervorstehenden Endrand (24) der Achse (2) befindet.

8. Drehsperrvorrichtung nach Anspruch 6 oder 7 und Anspruch 4 oder 5,
**dadurch gekennzeichnet,**
**dass** sich dieser Finger (48) im Bereich einer der genannten Blockierklauen (42) radial nach außen erstreckt.

9. Drehsperrvorrichtung nach einem der Ansprüche 3 bis 8,
**dadurch gekennzeichnet,**
**dass** der Blockierring (40) mit einem Montageschlitz (52) versehen ist.

10. Drehsperrvorrichtung nach einem der Ansprüche 6 bis 9,
**dadurch gekennzeichnet,**
**dass** dieser Montageschlitz (52) und dieser Finger (48) zueinander diametral gegenüber an dem Blockierring (40) angeordnet sind.

11. Drehsperrvorrichtung nach einem der Ansprüche 3 bis 10,
**dadurch gekennzeichnet,**
**dass** sie ferner eine Aufnahmenut (26) zur Aufnahme dieses Blockierrings (40) aufweist, die an einer radial inneren Endfläche (22) der Achse (2) ausgeführt ist.

12. Flugzeugtriebwerk,
**dadurch gekennzeichnet,**
**dass** es mit mindestens einer Drehsperrvorrichtung nach einem der Ansprüche 1 bis 11 ausgerüstet ist.

## Claims

1. A rotation-locking assembly comprising a hollow shaft (2) having an axial direction, a clamping nut (6) and a component (4), especially a bearing outer race,
said clamping nut (6) being screwed inside said shaft (2), and said clamping nut (6) having an end in contact with said component (4) and a free end, wherein the assembly comprises:
- several shaft cutouts (28) on the radially inner periphery of an end of the shaft (2),
- several nut cutouts (68) on the radially outer periphery of an end of said clamping nut (6),
- a locking plug (8) intended to be placed in a locking hole (682) formed by bringing a shaft cutout (28) into coincidence with a nut cutout (68),
and wherein it further comprises a retention ring (40) for retaining said locking plug (8) in an axial direction.

2. The rotation-locking assembly as claimed in claim 1, which comprises an odd number of shaft cutouts (28) and an even number of nut cutouts (68).

3. The rotation-locking assembly as claimed in claim 2, which comprises thirteen shaft cutouts (28) and twelve nut cutouts (68).

4. The rotation-locking assembly as claimed in claim 1, wherein the retention ring (40) comprises at least one retention lug (42) extending radially inward, the number of retention lugs 42) being identical to the number of shaft cutouts (28).

5. The rotation-locking assembly as claimed in claim 4, wherein said retention ring (40) has indentations (44) which open radially inward, each indentation (44) being situated between two successive retention lugs (42).

6. The rotation-locking assembly as claimed in any one of claims 1 to 5, which comprises a finger (48) on said retention ring (40) and a notch (50) in the shaft (2), which cooperate to prevent axial rotation of said retention ring (40).

7. The rotation-locking assembly as claimed in claim 6, wherein said notch (50) is situated opposite a shaft cutout (280) in an axially projecting end rim (24) of the shaft (2).

8. The rotation-locking assembly as claimed in claim 6 or 7 and claim 4 or 5, wherein said finger (48) extends radially outward opposite one of said locking lugs (42).

9. The rotation-locking assembly as claimed in any one of claims 3 to 8, wherein said retention ring (40) is equipped with an assembly gap (52).

10. The rotation-locking assembly as claimed in any one of claims 6 to 9, wherein said assembly gap (52) and said finger (48) are positioned in a diametrically opposed manner on said retention ring (40) .

11. The rotation-locking assembly as claimed in any one of claims 3 to 10, which additionally comprises a locating groove (26) for locating said retention ring (40), formed on a radially inner end face (22) of the shaft (2).

12. An aircraft engine which is equipped with at least one rotation-locking assembly as claimed in any one of claims 1 to 11.
